# EUROPEAN PATENT SPECIFICATION

(11) **EP 3 223 603 B1**
(45) Date of publication and mention of the grant of the patent: **22.04.2020**
(21) Application number: 14828109.0
(22) Date of filing: 27.12.2014
(51) Int. Cl.: A01K 5/01, A01K 13/00, A01K 15/02, A61D 5/00

(54) **MOUTH-CLEANING DEVICE FOR A PET**
MUNDREINIGUNGSVORRICHTUNG FÜR EIN HAUSTIER
DISPOSITIF DE NETTOYAGE BUCCO-DENTAIRE POUR ANIMAL DE COMPAGNIE

(43) Date of publication of application: 04.10.2017
(73) Proprietor: Hill's Pet Nutrition, Inc., Topeka, KS 66603 (US)
(72) Inventor: OGLEBY, Blair, Piscataway, NJ 08854 (US)
(74) Representative: Wichmann, Hendrik
(86) International application number: PCT/US2014/072458
(87) International publication number: WO 2016/105443

(56) References cited:
- WO-A1-2014/039250
- US-A- 5 743 210

## Description

### BACKGROUND

Oral hygiene is as important for pets as it is for people. Lack of proper oral hygiene may result in a pet having bad breath and, in some cases, oral (e.g., periodontal) disease. For example, more than 50% of dogs and cats show some signs of oral disease by the age of three, according to the American Veterinary Dental Society. Bad breath and oral disease may be the result of plaque, tartar, and microorganisms in the mouth of a pet.

To reduce the presence of plaque, tartar, and microorganisms, many pet owners use a toothbrush and toothpaste to clean the mouth of their pet. However, this may prove difficult and unpleasant as most pets tend to resist a mouth cleaning. In addition, many pet owners fail to brush the teeth of their pet on a regular basis. Another way to clean the mouth of a pet is to provide the pet with a "chew toy." As the pet chews on the toy, the friction between the toy and parts within the mouth of the pet may dislodge plaque, tartar, and microorganisms. While needing less effort on the part of the pet owner than brushing, chew toys prove less effective at cleaning the mouth of a pet. Therefore, it may be desirable to provide an improved apparatus and method for cleaning the mouth of a pet.
WO 2014/039250 A1 discloses an animal feeding bowl containing protrusions extending into a feeding well, and uses thereof. US 5 743 210 A illustrates for example a pet food dish comprising a lid to secure the product insert in the dish.

### BRIEF SUMMARY

A single-use, disposable mouth-cleaning device for a pet is provided, as defined in the claims. The device includes a base and a side wall extending from the base. The base and the side wall at least partially define an internal volume configured to receive a product. A plurality of protrusions extends from the base and the side wall. The protrusions are configured to at least partially clean the mouth of the pet.

The mouth-cleaning device is for a pet, comprising: a base; a side wall extending from the base, wherein the base and the side wall at least partially define an internal volume configured to receive a product; a plurality of protrusions extending from the base and the side wall, wherein the plurality of protrusions are configured to engage an oral tissue of a pet, characterized in that a lid is coupled to the side wall by the manufacturer via threaded connection, using heat and pressure or using ultrasound, wherein the base, the side wall, and the lid at least partially define an internal volume; and a product disposed and sealed within the internal volume by the manufacturer.

A method for cleaning a mouth of a pet is also provided, as defined in the claims. The method comprises placing a product onto a base of a single-use, disposable mouth-cleaning device, wherein the mouth-cleaning device further comprises a side wall extending upward from the base, and wherein the base and the side wall at least partially define an internal volume, the base and the side wall having a plurality of protrusions extending upwardly and inwardly therefrom, respectively, wherein the protrusions are configured to bend when contacted by the mouth of the pet as the pet consumes the product, thereby cleaning the mouth of the pet, and wherein the product is positioned in the internal volume; and sealing the product within the internal volume by coupling a lid to the side wall via threaded connection, using heat and pressure or using ultrasound, wherein the lid is coupled to the side wall by a manufacturer.

Further areas of applicability of the present invention will become apparent from the detailed description provided hereinafter. It should be understood that the detailed description and specific examples, while indicating preferred embodiments, are intended for purposes of illustration only and are not intended to limit the scope of the invention, which is defined by the claims.

### BRIEF DESCRIPTION OF THE DRAWINGS

The present invention will become more fully understood from the detailed description and the accompanying drawings, wherein:
Figure 1 depicts a perspective view of an illustrative mouth-cleaning device for a pet, according to an embodiment.
Figure 2 depicts a cross-sectional view of the mouth-cleaning device shown in Figure 1, according to an embodiment.
Figure 3 depicts a perspective view of the mouth-cleaning device with a curved side wall, according to an embodiment.
Figure 4 depicts a cross-sectional view of the mouth-cleaning device shown in Figure 3, according to an embodiment.
Figure 5 depicts a flowchart of a method for cleaning the mouth of a pet, according to an embodiment.

### DETAILED DESCRIPTION

The following description of the preferred embodiment(s) is merely exemplary in nature and is in no way intended to limit the invention, its application, or uses.

As used throughout, ranges are used as shorthand for describing each and every value that is within the range. Any value within the range can be selected as the terminus of the range. In the event of a conflict in a definition in the present disclosure and that of a cited reference, the present disclosure controls.

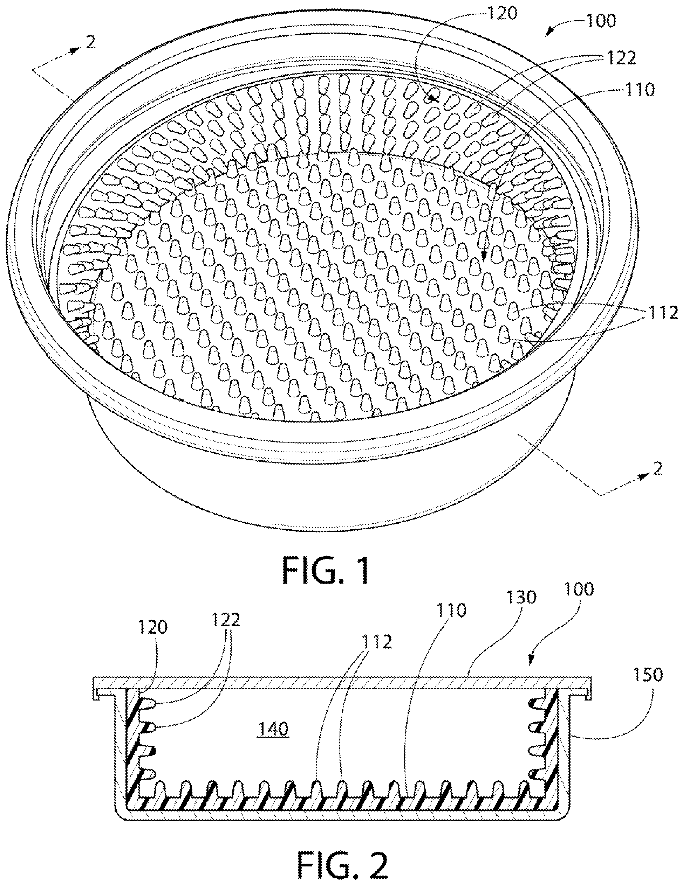

Figure 1 depicts a perspective view of an illustrative mouth-cleaning device 100 for a pet, according to an embodiment. The device 100 may include a base 110. The shape of the base 110 may be a circle, an oval, a square, a rectangle, or any other shape. As shown, the base 110 is flat and circular so that the base 110 may be positioned in a bowl, a can, or a container 150. In some embodiments, the base 110 may be an integral part of a container 150 (see Figure 2). The base 110 may be made from a metal, a polymer (e.g., rubber), an elastomer, or the like.

The base 110 has a plurality of protrusions 112 extending (e.g., upwardly) therefrom. The protrusions 112 may be coupled to, or integral with, the base 110. The protrusions 112 extending from the base 110 may be substantially perpendicular to the base 110. For example, a central longitudinal axis through one of the protrusions 112 may be oriented at an angle from about 80° to about 100° (e.g., about 90°) with respect to the base 110. The protrusions 112 may be made of the same material as the base 110 or a different material than the base 110. For example, the protrusions 112 may be made from a metal, a polymer (e.g., rubber or NYLON®), an elastomer, hair (e.g., real or synthetic), or the like.

The protrusions 112 may each have the same length, or they may have different lengths. The length of the protrusions 112 may be from about 1 mm to about 20 mm, about 2 mm to about 15 mm, or about 3 mm to about 10 mm. The protrusions 112 may each have the same thickness (e.g., diameter), or the protrusions 112 may have different thicknesses. The thickness of the protrusions 112 may be from about 0.1 mm to about 5 mm, about 0.1 mm to about 1 mm, or about 1 mm to about 3 mm. As shown, the protrusions 112 may be oriented in a series of columns and rows, where the rows are perpendicular to the columns. However, as will be appreciated, the protrusions 112 may oriented in any manner on the base 110. A distance between two adjacent protrusions 112 may be from about 1 mm to about 10 mm, about 1 mm to about 5 mm, or about 1 mm to about 3 mm. As will be appreciated, the distance between adjacent protrusions 112 may vary in different sections of the device 100 (e.g., on the base 110 and side wall 120).

One or more side walls 120 extend upward from the base 110. As shown, a single, circular side wall 120 extends around the periphery of the base 110. In other embodiments, the side wall 120 may include two or more portions (e.g., four portions when the base 110 is rectangular). In various embodiments, the side wall 120 may be coupled to, or integral with, the base 110. In some embodiments, the side wall 120 may be an integral part of the container 150.

The side wall 120 has a plurality of protrusions 122 extending therefrom. More particularly, the protrusions 122 may extend inwardly (e.g., into an internal volume) from the side wall 120. The protrusions 122 may be coupled to, or integral with, the side wall 120. The protrusions 122 extending from the side wall 120 may be substantially perpendicular to the side wall 120 (e.g., perpendicular to the points on the side wall 120 from which they extend). For example, a central longitudinal axis through one of the protrusions 122 may be oriented at an angle from about 80° to about 100° (e.g., about 90°) with respect to the side wall 120. The protrusions 122 may be made from the same material as the base 110, the side wall 120, or the protrusions 112.

The protrusions 112, 122 may be configured to bend or flex when contacted by an animal. More particularly, the protrusions 112, 122 may be configured to bend or flex when contacted by the teeth, gums, lips, or tongue of a pet. As such, the protrusions 112, 122 may function similarly to the bristles of a toothbrush and may serve to clean the mouth of the pet. In another embodiment, the protrusions 112, 122 may be rigid.

Figure 2 depicts a cross-sectional view of the mouth-cleaning device 100 shown in Figure 1, according to an embodiment. The cross-sectional shape of the protrusions 112, 122 may be cylindrical, conical, frustoconical, or the like. The materials, lengths, thicknesses, distances, and/or shapes of the protrusions 112, 122 may be mixed on the device 100. For example, one or more conical protrusions made of a polymer and one or more cylindrical protrusions made of hair/bristle may be positioned on the same base 110.

The cross-section of the side wall 120 may be planar and oriented at an angle with respect to the base 110. As shown, the angle is about 90°. In other embodiments, the angle may be from about 90° to about 179°, about 90° to about 120°, or about 120° to about 150°.

A lid 130 is coupled to or contacted with the side wall 120 distal to the base 110. An internal volume 140 is defined at least partially by the base 110, the side wall 120, and the lid 130. The lid 130 is coupled to the side wall 120 via a threaded connection, using heat and pressure, or using ultrasound. As shown, in one embodiment, the device 100 may be positioned at least partially within a container (e.g., a bowl) 150.

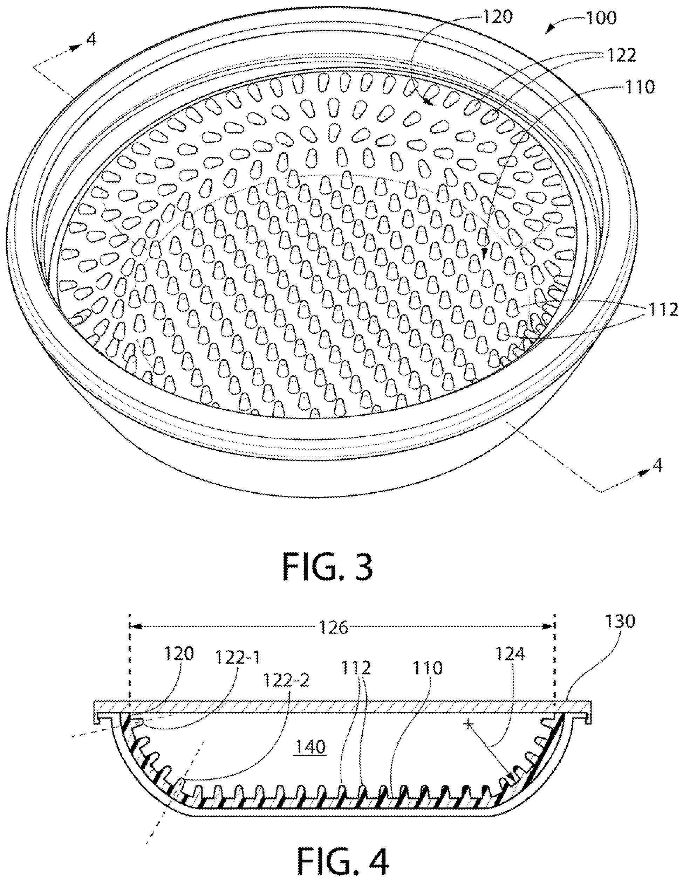

Figure 3 depicts a perspective view of the mouth-cleaning device 100 with a curved side wall 120, and Figure 4 depicts a cross-sectional view of the device 100 shown in Figure 3, according to an embodiment. As shown in Figure 3, the cross-section of the side wall 120 may be curved, rather than planar, moving away from the base 110 to create a "bowl" shape. For example, at least a portion of the side wall 120 may include a radius of curvature 124 that is from about 1 cm to about 20 cm, about 2 cm to about 15 cm, or about 3 cm to about 10 cm. As a result, a cross-sectional distance 126 between opposing portions of side wall 120 may increase moving away from the base 110.

The angles of the protrusions 122 on the side wall 120 with respect to the base 110 may vary based upon the positions of the protrusions 122 on the side wall 120 (e.g., the distance from the base 110). The angles of the protrusions 122 with respect to the base 110 may be from about 0° (distal to the base 110) to about 90° (proximate to the base 110). For example, an angle between a central longitudinal axis through a first protrusion 122-1 and the base 110 may be about 5°, and an angle between a central longitudinal axis through a second protrusion 122-2 and the base 110 may be about 80°.

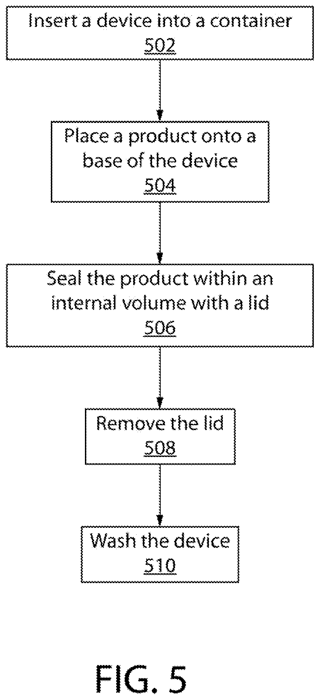

Figure 5 depicts a flowchart of a method 500 for cleaning the mouth of a pet, according to an embodiment. The method 500 may begin by inserting the device 100 into a container 150, as at 502. In one embodiment, the device 100 may be lowered into the container 150 and lifted out of the container 150 when desired. The device 100 may be constrained from lateral movement due to contact between the outer surface of the side wall 120 of the device 100 with the inner surface of the side wall of the container 150. This may allow the device 100 to be lifted out of the container 150 and washed after use. In another embodiment, the device 100 may be secured to the container 150 with, for example, an adhesive. In yet another embodiment, the device 100 may be integral with the container 150. In yet another embodiment, the container 150 may be omitted altogether, e.g., the device 100 may be or act as a container.

A product, for example a food product for animals, is then placed onto the base 110, as at 504. More particularly, the product is placed in the internal volume 140 of the device 100. The product may be a liquid, a solid, a gel, a paste, or the like. For example, suitable liquids may be water, milk-replacer, a therapeutic solution (e.g., including electrolytes), or a mouth or oral rinse. Suitable solids may be food (e.g., "dry" pet food or "wet" pet food), stews, chunks, gravy, and the like. Suitable gels may include energy supplements gels. Suitable pastes may be SCIENCE DIET®, toothpaste, and the like.

The product is sealed within the internal volume 140 of the device 100 by coupling the lid 130 to the side wall 120, as at 506. This is done by the manufacturer of the product. The lid 130 may then be removed, as at 508. This may be done by the pet owner.

As the pet consumes the product in the device 100, the protrusions 112, 122 in the device 100 may contact the mouth of the pet. More particularly, the protrusions 112, 122 may brush, scrub, or scrape off plaque, tartar, microorganisms, and the like from the teeth, gums, lips, tongue, and other mouth parts of the pet. Once the pet is finished eating the product, the device 100 may be discarded. For example, the device 100 may be removed from the container 150.

## Claims

1. A single-use, disposable mouth-cleaning device (100) for a pet, comprising:
a base (110);
a side wall (120) extending from the base, wherein the base (110) and the side wall (120) at least partially define an internal volume (140) configured to receive a product;
a plurality of protrusions (112, 122) extending from the base (110) and the side wall (120),
wherein the plurality of protrusions (112, 122) are configured to engage an oral tissue of a pet
**characterized in that** a lid (130) is coupled to the side wall (120) by the manufacturer via threaded connection, using heat and pressure or using ultrasound, wherein the base (110), the side wall (120), and the lid (130) at least partially define an internal volume (140); and
a product disposed and sealed within the internal volume (140) by the manufacturer.

2. The mouth-cleaning device of claim 1, wherein the protrusions (112) extend upward from the base (110).

3. The mouth-cleaning device of claim 1 or claim 2, wherein the protrusions (122) extend inward from the side wall (120).

4. The mouth-cleaning device of any of the preceding claims, wherein the protrusions (112, 122) are made from a polymer, an elastomer, or hair.

5. The mouth-cleaning device of any of the preceding claims, wherein the protrusions (112, 122) are configured to bend when contacted by an oral tissue of a pet.

6. The mouth-cleaning device of any of the preceding claims, wherein a length of the protrusions (112, 122) is from about 2 mm to about 15 mm, and wherein a thickness of the protrusions is from about 0.1 mm to about 5 mm.

7. The mouth-cleaning device of any of the preceding claims, wherein a central longitudinal axis through one of the protrusions (112) is oriented at an angle from about 80 degrees to about 100 degrees with respect to the base (110).

8. The mouth-cleaning device of any of the preceding claims, wherein a central longitudinal axis through one of the protrusions (122) is oriented at an angle from about 80 degrees to about 100 degrees with respect to the side wall (120).

9. The mouth-cleaning device of any of the preceding claims, wherein a central longitudinal axis through a first one of the protrusions (122-1) on the side wall (120) is oriented at a first angle with respect to the base (110), wherein a central longitudinal axis through a second one of the protrusions (122-2) on the side wall (120) is oriented at a second angle with respect to the base (110), and wherein the first angle is less than the second angle.

10. The mouth-cleaning device of claim 9, wherein the first one of the protrusions (122-1) is positioned farther away from the base (110) than the second one of the protrusions (122-2).

11. The mouth-cleaning device of any of the preceding claims, wherein the product comprises pet food.

12. A method for cleaning a mouth of a pet, comprising:
placing a product onto a base (110) of a single-use, disposable mouth-cleaning device (100), wherein the mouth-cleaning device (100) further comprises a side wall (120) extending upward from the base (110), and wherein the base (110) and the side wall (120) at least partially define an internal volume (140), the base (110) and the side wall (120) having a plurality of protrusions (112, 122) extending upwardly and inwardly therefrom, respectively, wherein the protrusions (112, 122) are configured to bend when contacted by the mouth of the pet as the pet consumes the product, thereby cleaning the mouth of the pet, and
wherein the product is positioned in the internal volume (140); and
sealing the product within the internal volume (140) by coupling a lid (130) to the side wall (120) via threaded connection, using heat and pressure or using ultrasound, wherein the lid (130) is coupled to the side wall (120) by a manufacturer.

13. The method of claim 12, further comprising placing the base (110) into a bowl (150).

14. The method of claims 12 or 13, further comprising removing the lid (130) coupled to the side wall (120) to provide access to the product in the internal volume (140).

15. Use of the mouth-cleaning device (100) according to any one of claims 1-11 as a single-use, disposable container for the packaging of pet food.

## Patentansprüche

1. Einweg-wegwerfbare Mundreinigungsvorrichtung (100) für ein Haustier, umfassend:
eine Basis (110);
eine Seitenwand (120), die sich von der Basis erstreckt, wobei die Basis (110) und die Seitenwand (120) mindestens teilweise ein inneres Volumen (140) definieren, das konfiguriert ist, um ein Produkt aufzunehmen;
eine Vielzahl von Vorsprüngen (112, 122), die sich von der Basis (110) und der Seitenwand (120) erstrecken,
wobei die Vielzahl von Vorsprüngen (112, 122) so konfiguriert sind, um mit einem oralen Gewebe eines Haustieres zu wechselwirken,
**dadurch gekennzeichnet, dass** ein Deckel (130) mit der Seitenwand (120) vom Hersteller über eine Gewindeverbindung unter Verwendung von Wärme und Druck oder unter Verwendung von Ultraschall verbunden ist,
wobei die Basis (110), die Seitenwand (120) und der Deckel (130) mindestens teilweise ein inneres Volumen (140) definieren; und
ein Produkt, das innerhalb des inneren Volumens (140) vom Hersteller bereitgestellt und versiegelt wird.

2. Mundreinigungsvorrichtung nach Anspruch 1, wobei sich die Vorsprünge (112) von der Basis (110) nach oben erstrecken.

3. Mundreinigungsvorrichtung nach Anspruch 1 oder Anspruch 2, wobei sich die Vorsprünge (122) von der Seitenwand (120) nach innen erstrecken.

4. Mundreinigungsvorrichtung nach einem beliebigen der vorhergehenden Ansprüche, wobei die Vorsprünge (112, 122) aus einem Polymer, einem Elastomer oder Haar hergestellt sind.

5. Mundreinigungsvorrichtung nach einem beliebigen der vorhergehenden Ansprüche, wobei die Vorsprünge (112, 122) zum Biegen konfiguriert sind, wenn sie von einem Mundgewebe eines Haustiers berührt werden.

6. Mundreinigungsvorrichtung nach einem beliebigen der vorhergehenden Ansprüche, wobei eine Länge der Vorsprünge (112, 122) von etwa 2 mm bis etwa 15 mm beträgt und wobei eine Dicke der Vorsprünge von etwa 0,1 mm bis etwa 5 mm beträgt.

7. Mundreinigungsvorrichtung nach einem beliebigen der vorhergehenden Ansprüche, wobei eine zentrale Längsachse durch einen der Vorsprünge (112) in einem Winkel von etwa 80 Grad bis etwa 100 Grad in Bezug auf die Basis (110) ausgerichtet ist.

8. Mundreinigungsvorrichtung nach einem beliebigen der vorhergehenden Ansprüche, wobei eine zentrale Längsachse durch einen der Vorsprünge (122) in einem Winkel von etwa 80 Grad bis etwa 100 Grad in Bezug auf die Seitenwand (120) ausgerichtet ist.

9. Mundreinigungsvorrichtung nach einem beliebigen der vorhergehenden Ansprüche, wobei eine zentrale Längsachse durch einen ersten der Vorsprünge (122-1) an der Seitenwand (120) in einem ersten Winkel in Bezug auf die Basis (110) ausgerichtet ist, wobei eine zentrale Längsachse durch einen zweiten der Vorsprünge (122-2) an der Seitenwand (120) in einem zweiten Winkel in Bezug auf die Basis (110) ausgerichtet ist, und wobei der erste Winkel geringer als der zweite Winkel ist.

10. Mundreinigungsvorrichtung nach Anspruch 9, wobei der erste der Vorsprünge (122-1) weiter von der Basis (110) entfernt als der zweite der Vorsprünge (122-2) angeordnet ist.

11. Mundreinigungsvorrichtung nach einem beliebigen der vorhergehenden Ansprüche, wobei das Produkt Tierfutter umfasst.

12. Verfahren zum Reinigen eines Mundes eines Haustiers, umfassend:
Platzieren eines Produkts auf eine Basis (110) einer einweg-wegwerfbaren Mundreinigungsvorrichtung (100), wobei die Mundreinigungsvorrichtung (100) ferner eine Seitenwand umfasst (120), die sich von der Basis (110) nach oben erstreckt, und wobei die Basis (110) und die Seitenwand (120) mindestens teilweise ein inneres Volumen (140) definieren, die Basis (110) und die Seitenwand (120) eine Vielzahl von Vorsprüngen (112, 122) aufweisen, die sich von dort jeweils nach oben und innen erstrecken, wobei die Vorsprünge (112, 122) zum Biegen konfiguriert sind, wenn sie durch den Mund des Haustiers berührt werden, wenn das Haustier das Produkt konsumiert, wodurch der Mund des Haustieres gereinigt wird, und
wobei das Produkt im inneren Volumen (140) positioniert ist; und
Versiegeln des Produkts innerhalb des inneren Volumens (140) durch Verbinden eines Deckels (130) mit der Seitenwand (120) über eine Gewindeverbindung unter Verwendung von Wärme und Druck oder unter Verwendung von Ultraschall, wobei der Deckel (130) durch einen Hersteller mit der Seitenwand (120) verbunden ist.

13. Verfahren nach Anspruch 12, das ferner das Platzieren der Basis (110) in eine Schale (150) umfasst.

14. Verfahren nach den Ansprüchen 12 oder 13, das ferner das Entfernen des Deckels (130), der mit der Seitenwand (120) verbunden ist, umfasst, um den Zugang zum Produkt im inneren Volumen (140) bereitzustellen.

15. Verwendung der Mundreinigungsvorrichtung (100) nach einem beliebigen der Ansprüche 1-11 als einweg-wegwerfbaren Behälter für das Verpacken von Tiernahrung.

## Revendications

1. Dispositif de nettoyage de bouche (100), jetable, à usage unique, pour un animal de compagnie, comprenant :
une base (110) ;
une paroi latérale (120) s'étendant à partir de la base, la base (110) et la paroi latérale (120) définissant au moins partiellement un volume interne (140) configuré pour recevoir un produit ;
une pluralité de saillies (112, 122) s'étendant à partir de la base (110) et de la paroi latérale (120),
les différentes saillies (112, 122) étant configurées pour engager un tissu buccal d'un animal de compagnie,
**caractérisé par le fait qu'**un couvercle (130) est couplé à la paroi latérale (120) par le fabricant par l'intermédiaire d'un raccordement fileté, à l'aide de chaleur et de pression ou à l'aide d'ultrasons, la base (110), la paroi latérale (120) et le couvercle (130) définissant au moins partiellement un volume interne (140) ; et
un produit disposé et scellé à l'intérieur du volume interne (140) par le fabricant.

2. Dispositif de nettoyage de bouche selon la revendication 1, dans lequel les saillies (112) s'étendent vers le haut à partir de la base (110).

3. Dispositif de nettoyage de bouche selon la revendication 1 ou la revendication 2, dans lequel les saillies (122) s'étendent vers l'intérieur à partir de la paroi latérale (120).

4. Dispositif de nettoyage de bouche selon l'une quelconque des revendications précédentes, dans lequel les saillies (112, 122) sont faites d'un polymère, d'un élastomère ou de poils.

5. Dispositif de nettoyage de bouche selon l'une quelconque des revendications précédentes, dans lequel les saillies (112, 122) sont configurées pour se courber lors d'un contact par un tissu buccal d'un animal de compagnie.

6. Dispositif de nettoyage de bouche selon l'une quelconque des revendications précédentes, dans lequel une longueur des saillies (112, 122) est d'environ 2 mm à environ 15 mm, et dans lequel une épaisseur des saillies est d'environ 0,1 mm à environ 5 mm.

7. Dispositif de nettoyage de bouche selon l'une quelconque des revendications précédentes, dans lequel un axe longitudinal central à travers l'une des saillies (112) est orienté à un angle d'environ 80 degrés à environ 100 degrés par rapport à la base (110).

8. Dispositif de nettoyage de bouche selon l'une quelconque des revendications précédentes, dans lequel un axe longitudinal central à travers l'une des saillies (122) est orienté à un angle d'environ 80 degrés à environ 100 degrés par rapport à la paroi latérale (120).

9. Dispositif de nettoyage de bouche selon l'une quelconque des revendications précédentes, dans lequel un axe longitudinal central à travers une première saillie parmi les saillies (122-1) sur la paroi latérale (120) est orienté à un premier angle par rapport à la base (110), dans lequel un axe longitudinal central à travers une seconde saillie parmi les saillies (122-2) sur la paroi latérale (120) est orienté à un second angle par rapport à la base (110), et dans lequel le premier angle est inférieur au second angle.

10. Dispositif de nettoyage de bouche selon la revendication 9, dans lequel la première saillie parmi les saillies (122-1) est positionnée plus loin de la base (110) que la seconde saillie parmi les saillies (122-2).

11. Dispositif de nettoyage de bouche selon l'une quelconque des revendications précédentes, dans lequel le produit comprend de la nourriture pour animal de compagnie.

12. Procédé pour nettoyer une bouche d'un animal de compagnie, comprenant:
placer un produit sur une base (110) d'un dispositif de nettoyage de bouche (100), jetable, à usage unique, le dispositif de nettoyage de bouche (100) comprenant en outre une paroi latérale (120) s'étendant vers le haut à partir de la base (110), et la base (110) et la paroi latérale (120) définissant au moins partiellement un volume interne (140), la base (110) et la paroi latérale (120) ayant une pluralité de saillies (112, 122) s'étendant vers le haut et vers l'intérieur respectivement à partir de celles-ci, les saillies (112, 122) étant configurées pour se courber lors d'un contact avec la bouche de l'animal de compagnie à mesure que l'animal de compagnie consomme le produit, permettant ainsi de nettoyer la bouche de l'animal de compagnie, et le produit étant positionné dans le volume interne (140) ; et
sceller le produit à l'intérieur du volume interne (140) par couplage d'un couvercle (130) à la paroi latérale (120) par l'intermédiaire d'un raccordement fileté, à l'aide de chaleur et de pression ou à l'aide d'ultrasons, le couvercle (130) étant couplé à la paroi latérale (120) par un fabricant.

13. Procédé selon la revendication 12, comprenant en outre la mise en place de la base (110) dans un bol (150).

14. Procédé selon l'une des revendications 12 ou 13, comprenant en outre le retrait du couvercle (130) couplé à la paroi latérale (120) pour donner accès au produit dans le volume interne (140).

15. Utilisation du dispositif de nettoyage de bouche (100) selon l'une quelconque des revendications 1 à 11 en tant que contenant jetable, à usage unique, pour le conditionnement de nourriture pour animal de compagnie.
